# EUROPEAN PATENT SPECIFICATION

(11) **EP 1 909 476 B1**
(45) Date of publication and mention of the grant of the patent: **21.11.2018**
(21) Application number: 07018985.7
(22) Date of filing: 27.09.2007
(51) Int. Cl.: G11B 17/10, G11B 17/20

(54) **Media processing device and method of controlling it**
Medienverarbeitungsvorrichtung und Steuerungsverfahren dafür
Dispositif de traitement de média et son procédé de contrôle

(30) Priority: 03.10.2006 JP 2006271485; 05.10.2006 JP 2006273903
(43) Date of publication of application: 09.04.2008
(73) Proprietor: Seiko Epson Corporation, Shinjuku-ku, Tokyo 163-0811 (JP)
(72) Inventor: Ichikawa, Mahito, Suwa-shi Nagano-ken 392-8502 (JP); Toshima, Kazuya, Suwa-shi Nagano-ken 392-8502 (JP); Tsunoda, Keisuke, Suwa-shi Nagano-ken 392-8502 (JP)
(74) Representative: MERH-IP Matias Erny Reichl Hoffmann Patentanwälte PartG mbB

(56) References cited:
- EP-A- 0 918 324
- JP-A- 2002 056 584
- JP-A- 2002 334 552
- JP-A- 2004 273 048
- JP-A- 2006 202 379
- US-A1- 2001 009 534
- US-A1- 2002 168 205
- US-A1- 2005 157 605
- US-A1- 2007 268 790
- US-A1- 2007 280 057
- US-A1- 2008 104 305
- US-B1- 6 400 659
- US-B1- 6 532 198

## Description

The present invention relates to a media processing device that writes data to data carrier media such as CD and DVD discs, and prints on a label side of the media.

Media processing devices that write data to data carrier media (simply referred to a "media" hereinafter) such as CD and DVD discs and print on the label side of the media are known. These media processing devices have a transportation mechanism for carrying media to the different processing stations inside the system. The transportation mechanism carries a blank medium stored in a blank-media stacker to the an internal media drive, and after writing data to the blank medium carries the processed medium to a processed-media stacker. After writing data to a medium, the medium is carried to an internal label printer, and after label printing the processed medium is transported to the processed-media stacker or a media exit. See, for example, JP-A-2000-260172 and JP-A-2002-056584.

JP-A-2002-334552 teaches a transportation mechanism that has a gripper for holding a disc (medium). The blank-media stacker and the processed-media stacker hold discs stacked in their thickness direction. The gripper picks up the topmost disc of each stack and holds the disc as the transportation mechanism moves the disc to the media drive and the printer. After data writing is completed, the gripper picks up the disc again and sequentially stacks the processed discs in the processed-media stacker.

JP-A-2004-273048 teaches a media processing device that has a tray unit on which plural disc stackers are disposed, and a rotor for rotating the tray unit on the bottom of the device case. When the tray unit turns and stops with a stacker directly below a disc clamping unit, the clamping head of the disc clamping unit descends. The disc clamping unit then clamps a disc and ascends, and the disc tray of the processing unit is unloaded. When the clamping head releases the clamped disc onto the disc tray and ascends, the disc tray is loaded and the recording process of the processing unit starts.

A media processing device according to the pre-characterizing portion of claim 1 is disclosed in US 6,400,659 B1.

A problem with the media processing devices described above is that if a problem occurs during a media transportation operation and the transportation process is not completed normally, the media processing device will execute the next process as commanded because there is no means for recognizing that such a problem has occurred. This can result in unexpected problems such as media not being stored in the intended stacker and being dropped outside the stacker. If left uncorrected, this can result in damage to the media processing device.
The document US 6,532,198 B1 discloses a media processing device according to the pre-characterizing portion of claim 1. In this prior art, an error message is reported to a host device when a disc transfer fails after the media processing device started to excute a movement command.
An object of the present invention is provide a media processing device and a method of controlling it that allow preventing events that may lead to damage to the media processing device if a medium being processed cannot be conveyed to any one of the data writing means, the printing means, and the media storage means in response to a command from the host computer.
This object is achieved by a media processing device as claimed in claim 1 and a method as claimed in claim 3. Preferred embodiments of the invention are defined in the dependent claims.
When a medium cannot be transported as instructed by the host computer, the media processing device according to the invention reports an error to the host computer and the host computer can therefore know that there is a problem with the media processing device. Issuing a next command can therefore be prevented. The media processing device can therefore be used safely, and the danger of causing damage can be reduced.
Other objects and attainments together with a fuller understanding of the invention will become apparent and appreciated by referring to the following description of preferred embodiments taken in conjunction with the accompanying drawings, in which:
- FIG. 1: is a schematic view of a publisher as a first embodiment according to the present invention;
- FIG. 2: is a perspective view showing the main internal parts of the first embodiment;
- FIG. 3: is a schematic view showing the mechanical arrangement of the publisher of the first embodiment;
- FIG. 4: is a perspective view showing a specific example of the arrangement of the media transportation mechanism of the first embodiment;
- FIG. 5: is a table of the relation between the starting and destination points that are set for controlling movement of the transportation arm;
- FIG. 6: is a flow chart describing the gripping or releasing operations;
- FIG. 7: is a flow chart describing the process for moving the transportation arm;
- FIG. 8: is a perspective view showing the main internal parts of a publisher according to a second embodiment of the invention;
- FIG. 9: is a perspective view of showing the major internal parts of the second embodiment;
- FIG. 10: is a schematic block diagram showing the mechanical arrangement of the second embodiment; and
- FIG. 11: is a table of the relation between the starting and destination points that are set for controlling movement of the transportation arm according to the second embodiment.

### Embodiment 1

A CD publisher is described below as a first embodiment of a media processing device according to the present invention in which CDs (referred to as discs below) are the data carrier media to be processed.

### Arrangement of the CD publisher

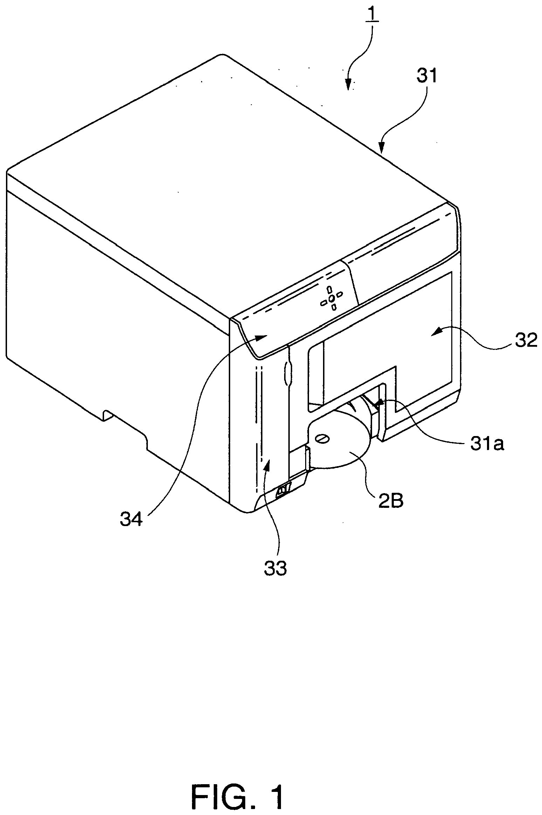

The CD publisher 1 (simply "publisher 1" below) has a basically box-shaped case 31 with doors 32 and 33. Terms like "front", "left", "right", "top", "bottom", "above" and "below" as used in the following description refer to the posture of the case 31 as shown in Fig. 1 with the doors 32 and 33 disposed at the front of the case 31. The doors 32 and 33 can open and close to the right and left, respectively. An operating panel 34 having indicators and operating buttons, for example, is disposed above the doors 32 and 33. A rectangular media exit 31a is disposed below the door 32 and has a long side extending horizontally. The media exit 31a opens to the outside to allow processed media to be removed.

A blank-media stacker 11 and a processed-media stacker 12 are disposed coaxially one above the other inside the case 31 on the right side thereof as seen from the front. The blank-media stacker 11 stores blank discs 2A that have not yet passed through a data writing process and a label printing process. The processed-media stacker 12 stores processed discs 2B that have undergone a data writing process and a label printing process, but the processed-media stacker 12 can also be used to store blank discs 2A as will be explained in more detail later. Note that the blank discs 2A and the processed discs 2B will be commonly referred to as discs 2

The blank-media stacker 11 has a slide tray 41 that can be pulled out horizontally to the front, and a pair of left and right curved side walls 42 and 43 disposed vertically on top of the slide tray 41, thus rendering a stacker that receives discs 2 through its top opening and holds the discs 2 stacked coaxially. The task of storing or replenishing blank discs 2A in the blank-media stacker 11 can be done easily by opening the door 32 and pulling the slide tray 41 with the side walls 42 and 43 mounted thereon out to the front. This pulling-out makes the top opening of the blank-media stacker 11 accessible outside of the case 31.

The processed-media stacker 12 below the blank-media stacker 11 is identically constructed, and has a slide tray 44 that can be pulled out horizontally to the front, and a pair of left and right curved side walls 45 and 46 disposed vertically on top of the slide tray 44, thus rendering a stacker that receives discs 2 through its top opening and holds the discs 2 stacked coaxially. Like the blank-media stacker 11, the processed-media stacker 12 can be pulled out to the front to become easily accessible by pulling out the slide tray 44.

The blank-media stacker 11 and the processed-media stacker 12 can each hold a plurality of discs 2 (50 discs each in this embodiment of the invention).

A general purpose stacker 13 is disposed behind and to the left of the blank-media stacker 11 and the processed-media stacker 12. The general purpose stacker 13 can be used to store media that is rejected because the data writing process failed, or to store processed discs 2B. A discharge media stacker 14 that is used for discharging the processed discs 2B to the outside is located in front of the general purpose stacker 13. These stackers 13 and 14 have a common base 47 and side walls 48, 49, and 50 rising vertically from the base 47.

The general purpose stacker 13 behind the discharge media stacker 14 comprises a storage space defined between the curved inner circumferential surface 48a of the rear side wall 48, and the curved inner circumferential surfaces 49a and 50a on the back side of the left and right side walls 49 and 50. The storage space stores the discs 2 stacked coaxially the discs being received through the top opening rendered by these side walls.

The discharge media stacker 14 comprises a storage space defined between the curved inner circumferential surfaces 49b and 50b on the front side of the left and right side walls 49 and 50, and storing the discs 2 stacked coaxially the discs being received through the top opening rendered by these side walls.

The general purpose stacker 13 can hold a plurality of discs 2, and the discharge media stacker 14 can also hold a plurality of discs 2. As an example, the number of discs 2 that can be stored in the general purpose stacker 13 is 30, and the number of discs 2 that can be stored in the discharge media stacker is 20.

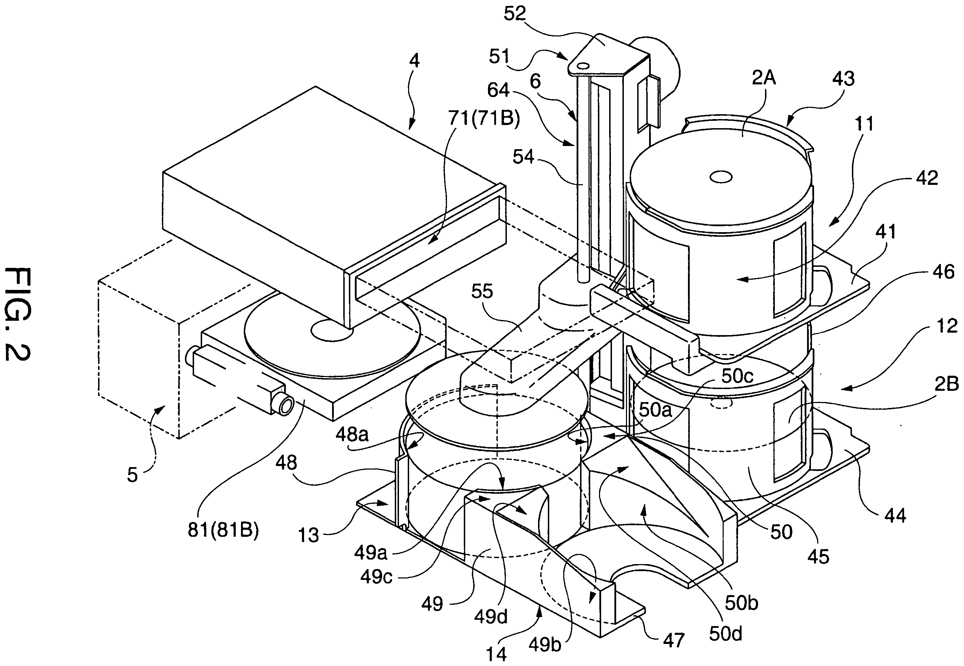

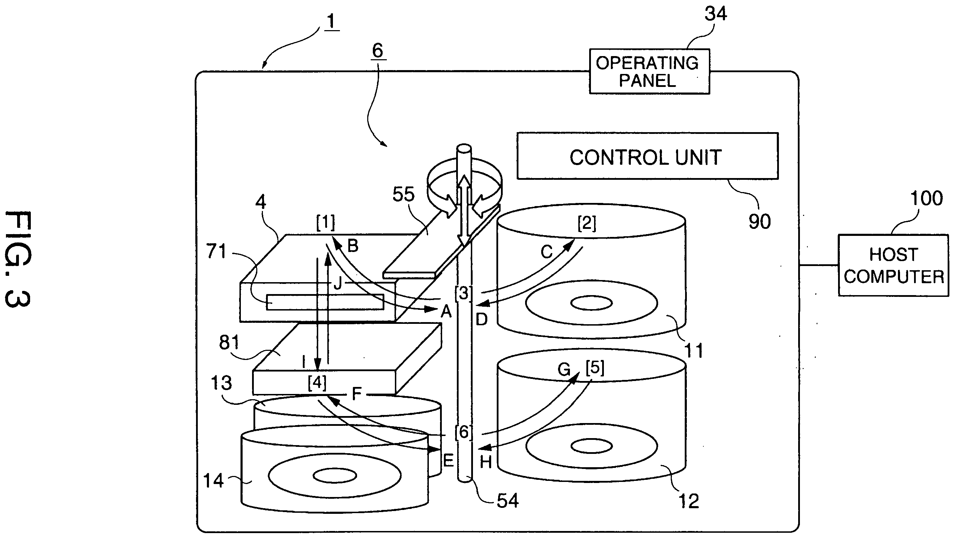

As shown in FIG. 2 and FIG. 3, a media transportation mechanism 6 is disposed behind the blank-media stacker 11 and the processed-media stacker 12. The media transportation mechanism 6 includes a chassis 51 that is attached vertically to the case 31, a vertical guide shaft 54 that rises vertically between top and bottom horizontal support plates 52 and 53 of the chassis 51, and a transportation arm 55 that is attached to this vertical guide shaft 54. The transportation arm 55 can travel up and down on the vertical guide shaft 54, and can pivot to the right and to the left around the vertical guide shaft 54.

A media drive 4 and a label printer 5 are located behind the media transportation mechanism 6, one upon the other, i.e., the media drive 4 is disposed above the label printer 5. In FIG. 2 the media tray 71 of the media drive 4 is shown in a retracted position 71B inside the media drive 4, and the printer tray 81 of the label printer 5 is shown in a rear position. The label printer 5 is an inkjet printer that uses ink cartridges (not shown in the figure) of one or more colors as the ink supply source, and the ink cartridges are installed in a cartridge housing (not shown in the figure).

The stackers 11 to 13 are located on the path of travel of the transportation arm 55. A gap enabling this transportation arm 55 to ascend and descend is formed between the left and the right side walls 42 and 43 of the blank-media stacker 11 and between the left and the right side walls 45 and 46 of the processed-media stacker 12, respectively. Another gap is formed vertically between the bottom of the blank-media stacker 11 and the top of the processed-media stacker 12 so that the transportation arm 55 can pivot horizontally to a position directly above each of the media stackers. The transportation arm 55 can therefore be positioned at a location at a specified height inside each of the media stackers 11 and 12.

The transportation arm 55 can also be positioned at a specified height inside the general purpose stacker 13 by pivoting and moving the transportation arm 55 to directly above the general purpose stacker 13, and then moving the transportation arm 55 vertically from this position to the specified height.

The position directly above the general purpose stacker 13 is the front position of the printer tray 81, which is a media transfer position, and the position directly above this front position of the printer tray 81 is the media transfer position of the media tray 71. These media transfer positions are therefore also on the path of travel of the transportation arm 55.

The discharge media stacker 14 is located in front of and beside the general purpose stacker 13, and is outside the pivot path of the transportation arm 55. That is, the discharge media stacker 14 is in a position outside of the path of travel of the transportation arm 55. How the processed discs 2B are stored in the discharge media stacker 14 in this embodiment of the invention is described below.

### Arrangement of the media transportation mechanism

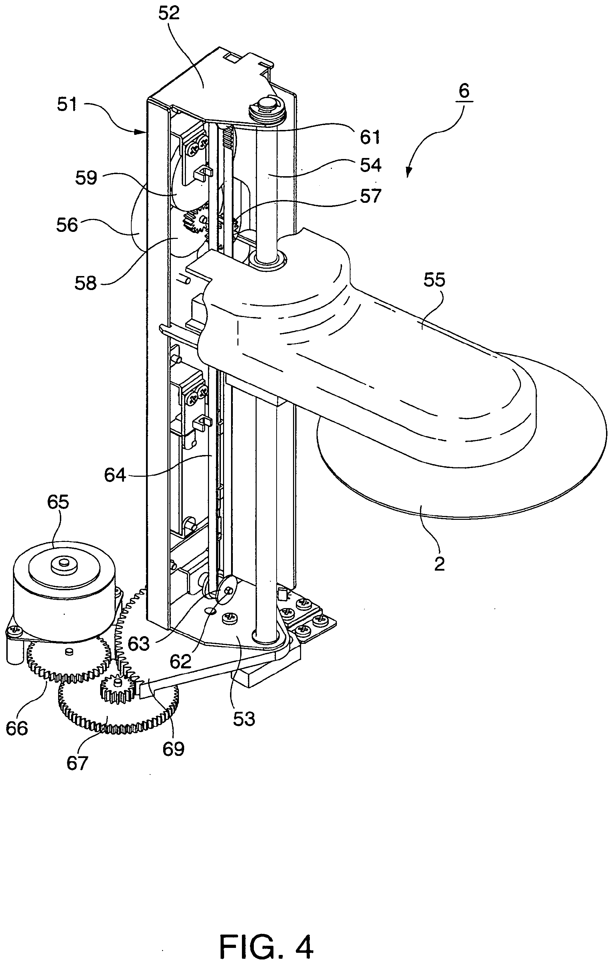

The mechanical arrangement of the media transportation mechanism is described next with reference to FIG. 4. FIG. 4 is a perspective view showing a specific example of the arrangement of the media transportation mechanism.

As described above the media transportation mechanism 6 has a chassis 51 that is attached perpendicularly to the case 31. The vertical guide shaft 54 is attached between the top and bottom horizontal support plates 52 and 53 of the chassis 51, and the transportation arm 55 is supported so that it can travel up and down and pivot on the vertical guide shaft 54.

The elevator mechanism of the transportation arm 55 has an elevator motor 56. Torque from the elevator motor 56 is transferred to a drive pulley 61 through an intervening speed reducing gear train including a pinion 57 that is attached to the output shaft of the motor, a compound transfer gear 58, and a transfer gear 59. The drive pulley 61 is supported freely rotatably on a horizontal rotary shaft (not shown in the figure) near the top end of the chassis 51.

A driven pulley 63 is supported freely rotatably on another horizontal rotary shaft (not shown in the figure) near the bottom end of the chassis 51. A timing belt 64 is mounted on the drive pulley 61 and driven pulley 63. The rear end part of the transportation arm 55 is fixed to the timing belt 64 on either the left or right side. As a result, when the elevator motor 56 is driven, the timing belt 64 travels vertically in a loop, and the transportation arm 55 attached to the timing belt 64 travels vertically on the vertical guide shaft 54.

The pivoting mechanism of the transportation arm 55 has a pivot motor 65. A pinion (not shown in the figure) is mounted on the output shaft of the pivot motor 65. Rotation of the pinion is transferred to a fan-shaped final gear 69 through an intervening speed reducing gear train including two compound transfer gears 66 and 67. The final gear 69 can pivot to the right and to the left around the vertical guide shaft 54. The chassis 51 in which the components of the elevator mechanism for the transportation arm 55 are assembled is mounted on the final gear 69. Driving the pivot motor 65 causes the final gear 69 to pivot to the right and to the left, and therefore also causes the chassis 51 that is mounted on the final gear 69 to pivot to the right and to the left around the vertical guide shaft 54. As a result, the transportation arm 55 that is held by the elevator mechanism mounted on the chassis 51 also pivots to the right and to the left around the vertical guide shaft 54.

The transportation arm 55 has, for example, three gripping claws in the center at its distal (free) end, and one of the claws can move radially. A disc 2 can be gripped by inserting the claws into the center hole of the disc and moving one claw relative to the others radially to the outside. By returning the one claw radially to the inside from this gripping position, a processed disc 2 can be released and dropped from the gripping claws.

### Publisher operation

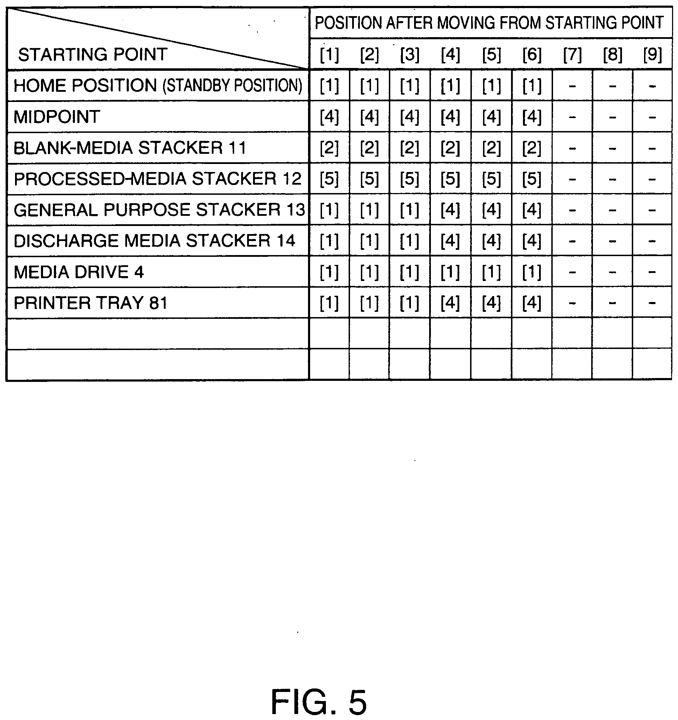

The operation of the publisher 1 according to this embodiment of the invention is described next with reference to FIG. 3 and FIG. 5. FIG. 5 is a table of the relation between the starting and destination points that are set for controlling movement of the transportation arm.

The positions denoted [1] to [6] indicate the positions of the distal end of the transportation arm 55 in FIG. 3 and correspond to the positions [1] to [6] in FIG. 5. More specifically, [1] is the home position (standby position) of the transportation arm 55, [2] is the position of the blank-media stacker 11, [3] is any position between the home position and the blank-media stacker 11, [4] is a midpoint or a point near to the midpoint of the vertical range of movement of the transportation arm 55, [5] is the position of the processed-media stacker 12, and [6] is any position between the midpoint and the processed-media stacker 12.

Position [7] in FIG. 5 is any position between [1] and [4] in FIG. 3, or any position below [4]; position [8] in FIG. 5 is any position between [2] and [5] in FIG. 3, or any position below [5]. Position [9] in FIG. 5 is any position between [7] and [8].

The transportation arm 55 normally moves along a preset path of travel. In this embodiment of the invention the path of travel (movement) is the path from any position [1] to [6] to any position [1], [2], [4], or [5]. More specifically, the path of travel is the path indicated by arrows A to J in FIG. 3, and position [9] is any position (including positions 7 and 8) that is not on this normal path of travel. More specifically, when the transportation arm 55 is at position [9], the transportation arm 55 may have unexpectedly stopped outside of the normal path of travel due, for example, to a problem that has occurred in the publisher 1. A respective arm detector is disposed at each of positions [1], [2], [4], and [5] so that the position of the transportation arm 55 can be detected. This embodiment of the invention calculates the distance to travel from the respective starting point [1], [2], [4], or [5] to the respective destination specified by a movement command, and moves the transportation arm 55 correspondingly.

When the transportation arm 55 is positioned at any of the positions [3], [6], [7], [8], and [9], the transportation arm 55 is first moved to one of the positions at which an arm detector is located (any of the positions [1], [2], [4], and [5]), the distance to travel is then calculated, and the arm is moved to the destination.

As shown in FIG. 3, the publisher 1 is connected to communicate with a host computer 100 and has a control unit 90 that controls driving the media transportation mechanism 6. The control unit 90 controls the movement of the transportation arm 55 according to a movement command received from the host computer 100.

When the control unit 90 detects the transportation arm 55 by means of one of the detectors, the control unit 90 stores the detected position, that is, position [1], [2], [4], or [5], as the starting point. In this case, the control unit 90 functions as a position detection means and a memory means. The control unit 90 then calculates the distance of travel that the transportation arm 55 must move from this starting point to the destination specified by the movement command.

In response to a media grip command from the host computer 100, the control unit 90 moves the gripping claws disposed at the center of the distal end of the transportation arm 55 to grip a disc 2. In response to a release command from the host computer 100, the control unit 90 lowers the transportation arm 55 at the destination and operates the gripping claws to release the disc 2. When the disc 2 has been released, the transportation arm 55 is raised and stopped at the point where descent started.

This embodiment of the invention moves the transportation arm 55 based on a movement command from the host computer 100, and then grips or releases the disc 2 at the destination based on a grip command or release command. Media transportation modes (operating modes) such as described below can therefore be set by combining plural movement commands and grip and release commands to grip and release a disc 2 by means of the gripping claws.

### Normal processing mode

(1) A blank disc 2A is picked up from the blank-media stacker 11, carried to the media drive 4, and released there.
(2) The media drive 4 writes data to the blank disc 2A.
(3) The disc 2 is picked up from the media drive 4, carried to the label printer 5, and released there.
(4) The label printer 5 prints a label on the label side of the disc.
(5) The processed disc 2B is picked up from the label printer 5, carried to the discharge media stacker 14, and released there.

### Continuous processing mode

In this mode, blank discs 2A are stored in both the blank-media stacker 11 and the processed-media stacker 12 to the storage capacity of the stackers. If each stacker can hold 50 discs for a total storage capacity of 100 discs, the continuous processing mode is the processing mode for continuously producing a total 100 processed discs 2B.
(1) A blank disc 2A is picked up from the processed-media stacker 12, carried to the media drive 4, and released there.
(2) The media drive 4 writes data to the blank disc 2A.
(3) The disc 2 is picked up from the media drive 4, carried to the label printer 5, and released there.
(4) The label printer 5 prints a label on the label side of the disc.
(5) The disc 2 is picked up from the label printer 5, carried to the general purpose stacker 13, and released there.
(6) The sequence of steps (1) to (5) is repeated continuously for the next 29 discs.
(7) A blank disc 2A is picked up from the processed-media stacker 12 in which 20 discs remain, carried to the media drive 4, and released there.
(8) After executing steps (2) and (4), the processed disc 2B is picked up from the label printer 5, carried to the discharge media stacker 14, and released there.
(9) The sequence of steps (7) and (8) is repeated continuously for the next 19 discs.
(10) A blank disc 2A is picked up from the blank-media stacker 11, carried to the media drive 4, and released there.
(11) After executing steps (2) to (4), the processed disc 2B is picked up from the label printer 5, carried to the processed-media stacker 12, and released there.
(12) The sequence of steps (10) and (11) is repeated continuously for the next 49 discs.

The processed discs 2B are stored in the general purpose stacker 13, the discharge media stacker 14, and the processed-media stacker 12 in the continuous processing mode. More specifically, the use of each stacker is not fixed but can be changed according to the operating mode.

The media transportation modes described above are examples only, and other modes are conceivable. In this embodiment of the invention the transportation arm 55 can carry the discs 2 from any of the units including the media drive 4, the label printer 5, the blank-media stacker 11, and the processed-media stacker 12 to any of the units including the media drive 4, the label printer 5, the processed-media stacker 12, and the discharge media stacker 14. A plurality of media transportation routes can therefore be set, and the publisher 1 can be set to a variety of operating modes.

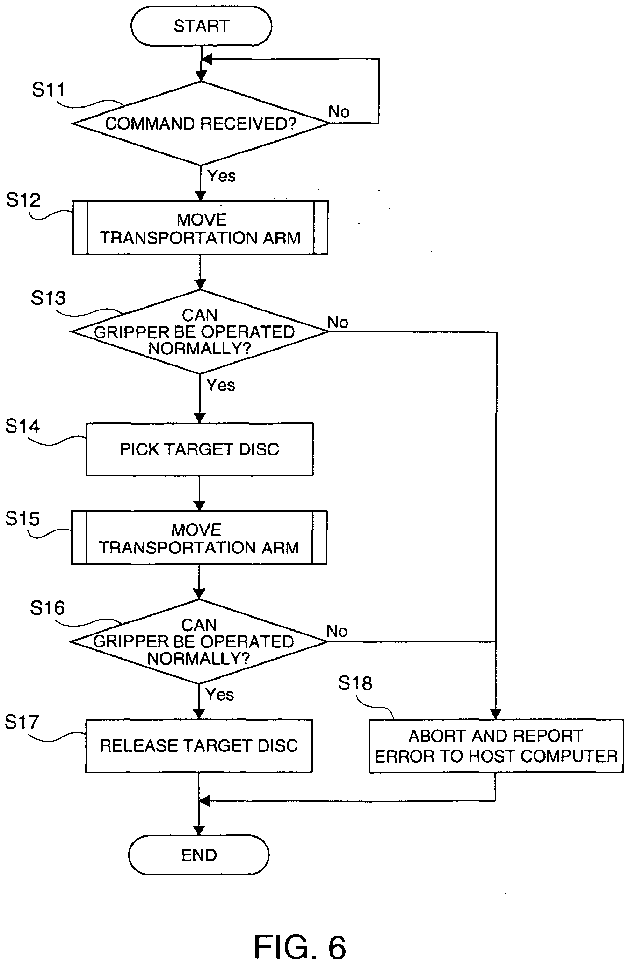

The disc gripping or releasing process executed in step (1) in the normal processing mode is described next with reference to the flow chart in FIG. 6.

When a command set including a first movement command that instructs the location of the blank-media stacker 11 as the destination, a grip command, a second movement command that instructs the location of the media drive 4 as the destination, and a release command is received (step S11 returns Yes), the distal end of the transportation arm 55 is first moved according to the first movement command to the position [2], i.e., the blank-media stacker 11 (step S12).

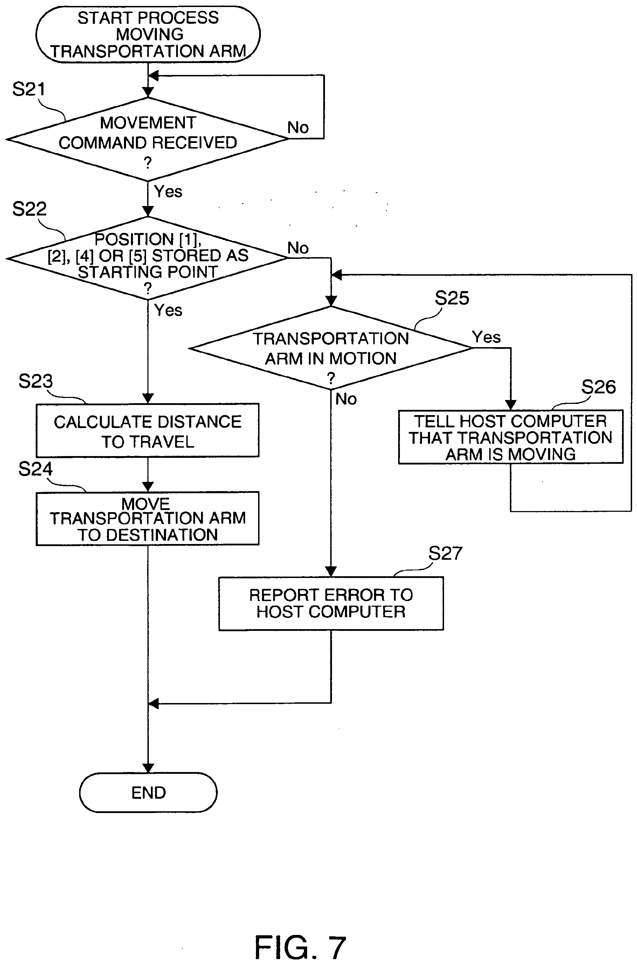

The process of moving the transportation arm 55 in step S12 is described with reference to the flow chart in FIG. 7.

When the control unit 90 receives a movement command (of the command set received in step S11 in FIG. 6) (step S21 returns Yes), the control unit 90 determines if the transportation arm 55 is located at position [1], [2], [4] or [5] (step S22). More specifically, the control unit 90 determines which of the positions [1], [2], [4] and [5], if any, is stored as the starting point of the transportation arm 55.

If one of the positions [1], [2], [4] or [5] is stored as the starting point (step S22 returns Yes), the control unit 90 calculates the distance to travel from the stored starting point to the destination specified by the received movement command (step S23), and then moves the transportation arm 55 (step S24).

Let us assume, the starting point of the transportation arm 55 is the home position [1] and the transportation arm 55 is moved according to the movement command that instructs the blank-media stacker 11 as the destination. If the movement is completed normally, the control unit 90 stores position [2], the blank-media stacker 11, as the next starting point. The path of travel in this case is represented by arrows A -> C in FIG. 3.

If the starting point stored by the control unit 90 is position [5], i.e., the processed-media stacker 12, and the received movement command specifies the position of the media drive 4 as the destination, the transportation arm is moved to position [1], the home position of the transportation arm 55. The path of travel in this case is represented by arrows H -> F -> J in FIG. 3.

When the starting point stored by the control unit 90 is position [2], that is, the blank-media stacker 11, and the received movement command specifies the position of the printer tray 81 as the destination, the transportation arm is also moved to position [1], the home position of the transportation arm 55. The path of travel in this case is represented by arrows D -> B in FIG. 3.

If the starting point stored by the control unit 90 is position [1], the home position of the transportation arm 55, and the received movement command specifies the position of the processed-media stacker 12 as the destination, the transportation arm is moved to position [5], the location of the processed-media stacker 12. The path of travel in this case is represented by arrows I -> E -> G in FIG. 3.

If in step S22 none of the positions [1], [2], [4] and [5] is stored as the starting point (step S22 returns No), whether the transportation arm 55 is moving is determined. If the transportation arm 55 is moving (step S25 returns Yes), the received movement command is not executed and the host computer 100 is informed that the transportation arm 55 is in motion (step S26). If movement of the transportation arm 55 has stopped, however, an error is returned to the host computer 100 (step S25 returns No, step S27).

If the transportation arm 55 is not in motion in step S25 (step S25 returns No), the transportation arm 55 is outside the normal path of travel. The movement command is therefore not executed and an error is returned to the host computer 100 indicating that a destination that cannot be reached from the current location was specified (step S27).

For example, the motor could go out of step and stop unexpectedly while the transportation arm 55 is moving from position [1] to position [4] (the situation when the transportation arm 55 is at position [7] after the motor stops), or the motor could go out of step, for example, and stop unexpectedly while gripping or releasing a disc at position [2] or position [5] (the situation when the transportation arm 55 is at position [8] after the motor stops). If the transportation arm 55 thus stops abnormally, the movement command is not executed and an error report is returned to the host computer 100.

Referring again to FIG. 6, the process of gripping or releasing a disc is described next.

When the transportation arm 55 moves to the blank-media stacker 11 (step S12), the control unit 90 determines if the current position enables a normal control of the claw operation. Except for the case in which a disc 2 has already been gripped due to a command other than the grip command received in step S11, a condition in which a claw operation can be controlled normally is any condition in which the transportation arm 55 is positioned at a point where the disc 2 can be gripped.

A condition in which the transportation arm 55 is positioned at a point where a disc 2 can be picked up is when the transportation arm 55 is positioned at one of the positions [1], [2], [4] and [5] where an arm detector is located. This is because the location of the transportation arm 55 is unknown if the transportation arm 55 is positioned at any position other than [1], [2], [4] or [5], and must therefore be moved to one of the positions at which an arm detector is located.

If the control unit 90 determines that the transportation arm 55 is positioned where a disc 2 can be gripped (step S13 returns Yes), because position [2] at the blank-media stacker 11 is stored as the starting point, the claws are inserted into the center hole of the blank disc 2A and one claw is moved relative to the others radially to the outside to pick one blank disc 2A from the blank-media stacker 11 (step S14).

If step S13 determines that a disc 2 has already been gripped, or that the transportation arm 55 is positioned at a point where a disc 2 cannot be gripped, a gripping process abort report is returned to the host computer 100 without gripping a blank disc 2A.

With a blank disc 2A gripped in step S14, the transportation arm 55 is moved to the home position at position [1] based on the movement command setting the position of the media drive 4 as the destination (step S15). The process of moving the transportation arm 55 in this case is the same as that described in step S12 with reference to the flow chart in FIG. 7. If moving the transportation arm 55 ends normally, the control unit 90 stores position [1] as the starting point.

Next, the control unit 90 again determines if the current position enables driving and controlling the claws normally.

In step S16 the condition in which driving the claws can be controlled normally is when a disc 2 has already been gripped and the transportation arm 55 is positioned at a point where the gripped disc 2 can be released.

If the control unit 90 determines that the transportation arm 55 is positioned at a point where the disc 2 can be released (step S16 returns Yes) because a disc 2 has been gripped and position [1], the home position, is stored as the starting point, the one claw is moved radially to the inside to release the blank disc 2A onto the media tray 71 of the media drive 4 (step S17).

However, if is determined in step S16 that a disc 2 has not been gripped or the transportation arm 55 is positioned at a point where the blank disc 2A cannot be released, a releasing process abort error is reported to the host computer 100 without releasing the disc (step S18).

Note that if the claws are driven to be closed in step S13 when a blank disc 2A has been gripped, the gripped blank disc 2A may be dropped. Furthermore, if the claws are driven to release the disc in step S16 when a blank disc 2A has not been gripped, the operation is simply wasted.

Furthermore, if the claws are driven in step S13 when the transportation arm 55 is positioned at a point where a disc cannot be gripped, there could be a safety-related problem with the media processing device and damage could result.

In addition, if the claws are driven when the transportation arm 55 is positioned at a point where a disc cannot be released, there could be a safety-related problem with the media processing device and damage could result.

This embodiment of the invention therefore does not execute the gripping and releasing operations in cases such as described above, and executes the grip command and the release command only when it is determined that driving the claws can be controlled normally. Operating errors can therefore be prevented.

Furthermore, because the host computer 100 is informed when the grip command or the release command is not executed, the user is alerted that the grip command or release command was not executed correctly.

As described above, if the starting point of the transportation arm 55 when a movement command is received from the host computer 100 is any point not corresponding to position [1], [2], [4] or [5], that is, if the transportation arm 55 is off the normal path of travel of the transportation arm, the control unit 90 in this embodiment of the invention does not execute the received movement command and returns an error report to the host computer 100. The host computer 100 thus knows that a problem with the publisher 1 has occurred. Issuing subsequent commands can therefore be blocked, the publisher 1 can be used safely, and the danger of damage occurring can be reduced.

Furthermore, if the starting point of the transportation arm 55 when a movement command is received from the host computer 100 does not correspond to any of positions [1], [2], [4] and [5] and the transportation arm 55 is moving, this embodiment of the invention reports to the host computer 100 that the movement command could not be executed. The danger of damage to the publisher 1 can therefore be reduced because issuing subsequent commands can be blocked and operating errors will not occur.

### Embodiment 2

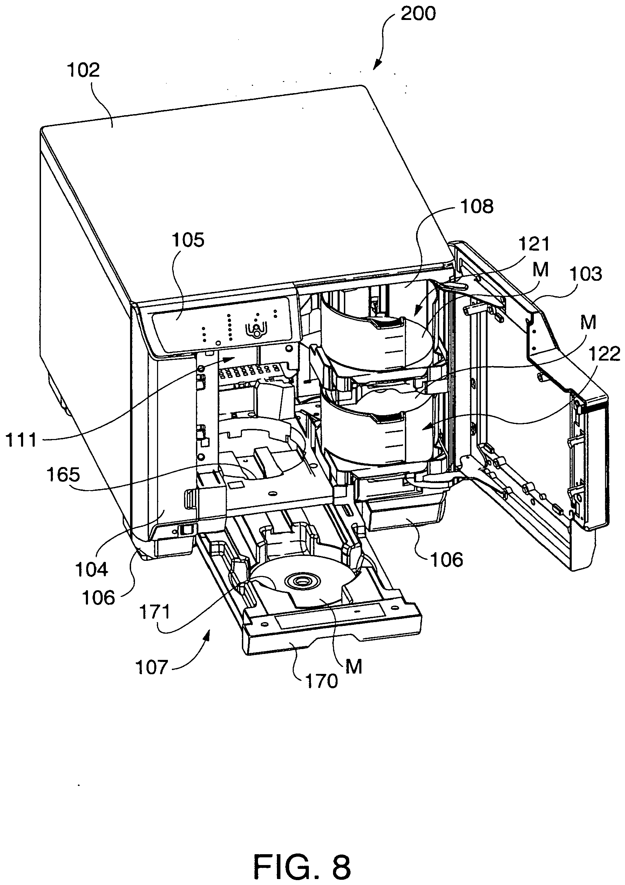

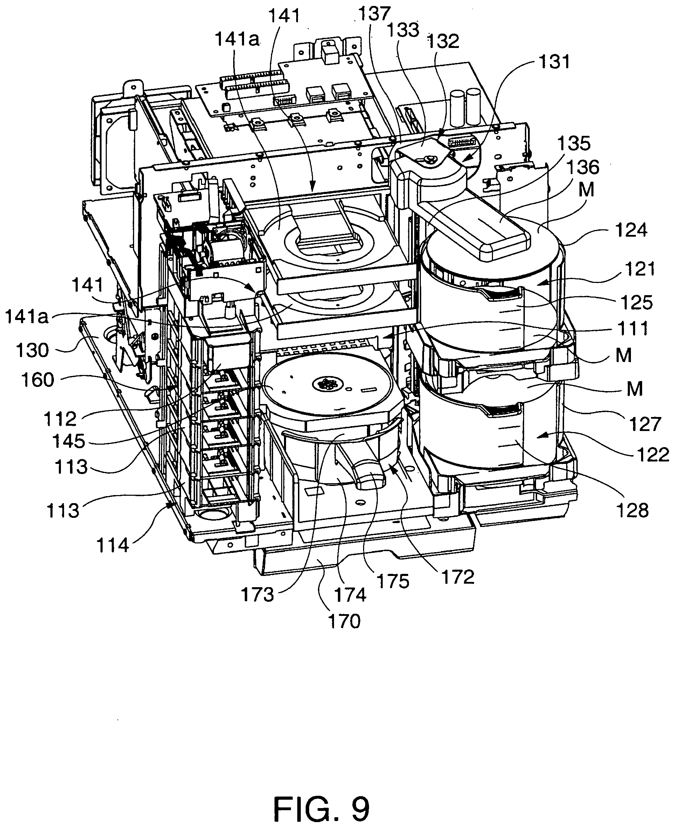

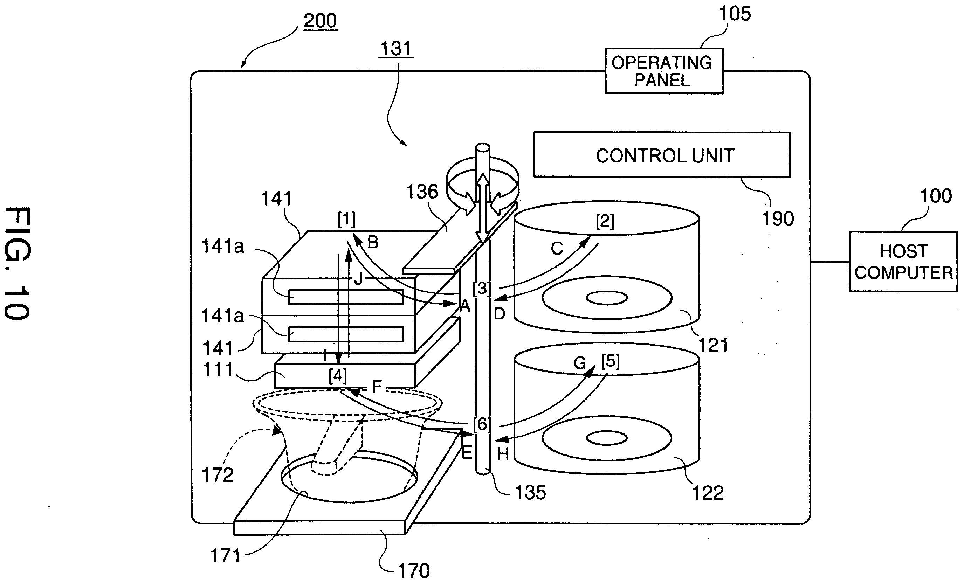

A second embodiment of a media processing device according to the present invention is described next with reference to the accompanying figures. FIG. 8 is a perspective view showing the appearance of a publisher according to this embodiment of the invention when the front doors are open, FIG. 9 is a perspective view of the major internal parts of the publisher, and FIG. 10 is a schematic block diagram showing the mechanical arrangement of the publisher.

### Arrangement of the CD publisher

As shown in FIG. 8, this publisher 200 is a media processing device for writing data to disc-shaped media such as CD and DVD media (referred to as simply "discs" below) and for printing on the label side of the discs, and has a basically box-shaped case 102. A right door and a left door 103 and 104 that can open and close are disposed at the front of the case 102. Terms like "front", "left", "right", "top", "bottom", "above" and "below" as used in the following description refer to the posture of the case 102 as shown in Fig. 8 with the doors 103 and 104 disposed at the front of the case 102. An operating panel 105 having indicators and operating buttons, for example, is disposed at the top left part of the case 102, and support legs 106 projecting downward are disposed on the left and the right side at the bottom of the case 102. A drawer mechanism 107 is disposed between the left and right support legs 106.

The door 103 on the right side as seen from the front opens and closes an opening 108 at the front of the publisher 200 as shown in FIG. 8, and is used for opening and closing the opening 108 in order to load unused (blank) discs M through the opening 108 or to remove finished discs M through the opening 108.

The other door 104 on the left side as seen from the front is opened and closed to replace the ink cartridges 112 of the label printer 111 shown in FIG. 9. Opening the door 104 exposes a cartridge carrier 114, which has a plurality of cartridge holders 113 arranged vertically.

A first media stacker 121 and a second media stacker 122 are disposed, one above the other, inside the case 102 of the publisher 200 so that the centers of discs M accommodated in these stackers are coaxially aligned. The first media stacker 121 stores a plurality (such as 50) of blank discs M that have not yet passed through the data writing process. The second media stacker 122 stores a plurality (such as 50) of blank discs M or processed discs M. Both the first media stacker 121 and the second media stacker 122 can be freely installed at and removed from a respectively prescribed position.

The first media stacker 121 that is provided on top of the second media stacker 122 has a pair of right and left curved side walls 124 and 125 disposed so that the discs M can be received through a top opening and stored in a coaxial stack. Storing or replenishing discs M in the first media stacker 121 can be done easily by opening the door 103 and pulling the first media stacker 121 out.

The second media stacker 122 is constructed in the same way as the first one and has a pair of right and left curved side walls 127 and 128, rendering a stacker that can receive the discs M through a top opening and store the discs M in a coaxial stack. Storing or replenishing discs M in the second media stacker 122 can be done easily by opening the door 103 and pulling the second media stacker 122 out.

A transportation mechanism 131 for the discs is disposed behind the first media stacker 121 and the second media stacker 122. The transportation mechanism 131 has a vertical guide shaft 135 that rises vertically between a main frame 130 and a top plate 133 of a chassis 132. A transportation arm 136 is supported so that it can move vertically and pivot on this vertical guide shaft 135. A drive motor 137 enables the transportation arm 136 to move vertically along the vertical guide shaft 135 and to pivot to the right and to the left around the vertical guide shaft 135.

Two media drives 141 are stacked vertically upon each other at the side of and behind the first and the second media stackers 121 and 122 and the transportation mechanism 131, and a carriage (not shown in the figure) of the label printer 111 is disposed movably below these media drives 141.

Each of the media drives 141 has a media tray 141a that can move between a position for writing data to the discs M and a transfer position for loading and unloading the discs M.

The label printer 111 has a media tray 145 that can move between a printing position for printing a label on the label side of the discs M, and a transfer position for loading and unloading the discs M.

FIG. 9 shows the media trays 141a of the top and bottom media drives 141 pulled out to the transfer position, and the media tray 145 of the label printer 111 below the media drives 141 moved forward to the transfer position.

The label printer 111 is an inkjet printer that uses ink cartridges 112 as the ink supply mechanism 160. This embodiment of the invention uses ink cartridges 112 in six different colors (black, cyan, magenta, yellow, light cyan, and light magenta). The ink cartridges 112 are loaded from the front into the cartridge holders 113 of the cartridge carrier 114.

A gap enabling the transportation arm 136 of the transportation mechanism 131 to ascend and descend is formed between the left and right side walls 124 and 125 of the first media stacker 121, and between the left and right side walls 127 and 128 of the second media stacker 122. A gap is also formed between the first media stacker 121 and the second media stacker 122 so that the transportation arm 136 of the transportation mechanism 131 can pivot horizontally for positioning directly above the second media stacker 122. When both media trays 141a are retracted into the media drives 141, the transportation arm 136 of the transportation mechanism 131 can descend to access the media tray 145 in the transfer position.

When both media trays 141a are positioned at the data writing position and the media tray 145 is moved to the inside to be positioned at the printing position, the transportation arm 136 of the transportation mechanism 131 can descend below the height of the media tray 145. A guide hole 165 is formed below the transfer position of the media tray 145 so that discs M released when the transportation arm 136 descends to this position pass through the guide hole 165. Another media stacker (a separate stacker) described below is disposed in this guide hole 165.

The drawer mechanism 107 has a sliding tray 170 that can be pulled out from the main frame 130 to an open position, loaded, and then closed again by pushing it below the main frame 130. A stacker unit 171 rendered as an open recess is disposed in the sliding tray 170. When the sliding tray 170 is in the storage position (closed position), the stacker unit 171 is positioned below the guide hole 165, and the center of the stacker unit 171 is positioned coaxially to the media trays 141a and the media tray 145 in the transfer position. The stacker unit 171 receives discs M deposited through the guide hole 165, and stores only a relatively small number (such as 5 to 10) of discs M. The stacker unit 171 receives the discs M from the top and stores the discs M stacked coaxially.

A third media stacker 172 (a separate stacker) with a larger disc storage capacity than the stacker unit 171 can be installed in and removed from the guide hole 165 and the stacker unit 171 of the sliding tray 170 in the storage position.

This third media stacker 172 also has a pair of curved side walls 173 and 174, receives discs M through a top opening between the walls, and can store a plurality of (such as 50) discs M stacked coaxially. A gap enabling the transportation arm 136 of the transportation mechanism 131 to ascend and descend is formed between the left and right side walls 173 and 174. A handle 175 that is held by the user during installation and removal is disposed at a top part of one side wall 174.

When the third media stacker 172 is installed as shown in FIG. 9, discs M can be stored in the third media stacker 172 after the discs have been removed as blank discs M from the lower second media stacker 122, recorded by one of the media drives 141 and printed the label printer 111.

Furthermore, the first media stacker 121 and the second media stacker 122 can both be loaded with discs M (blank media) to the maximum storage capacity (50 discs each), all discs M (50 discs) in the second media stacker 122 can be sequentially processed and subsequently stored in the third media stacker 172, and then all discs M (50 discs) in the first media stacker 121 can be sequentially processed and then stored in the emptied second media stacker 122 in a manner like that explained for the first embodiment. A number of discs M equal to the maximum storage capacity of the first media stacker 121 plus that of the second media stacker 122 (50 discs + 50 discs) can therefore be processed in one operation (batch processing mode).

In addition, when the third media stacker 172 is removed, blank discs M can be taken from the first media stacker 121 or the second media stacker 122, data can be recorded by the media drives 141 and a label can be printed by the label printer 111, and the processed discs M can then be stored in the stacker unit 171 of the sliding tray 170 in the storage position.

Discs M for which processing has been completed can thus be removed from the stacker unit 171 by pulling the sliding tray 170 out. More specifically, completed discs M can be removed one or multiple discs at a time while the discs M are processed and the door 103 remains closed (external discharge mode).

By combining the vertical travel and right and left pivoting actions of the transportation arm 136 of the transportation mechanism 131, the discs M can be desirably transported to the first media stacker 121, the second media stacker 122, the stacker unit 171 of the sliding tray 170 (or the third media stacker 172), the media tray 141a of each of the media drives 141, and the media tray 145 of the label printer 111.

### Publisher operation

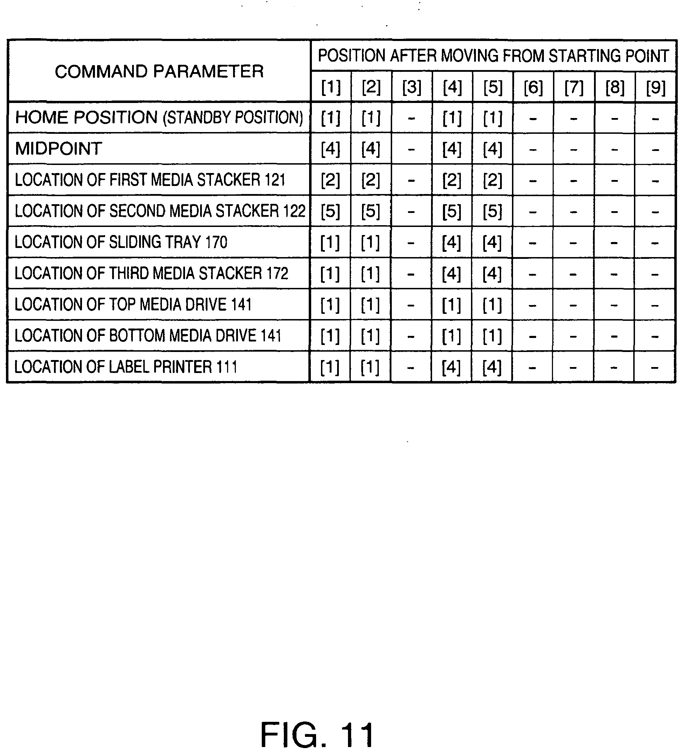

The operation of the publisher 200 according to this second embodiment of the invention is described next with reference to FIG. 10 and FIG. 11. FIG. 11 is a table of the relation between the starting and destination points that are set for controlling movement of the transportation arm.

The positions denoted [1] to [6] indicate the positions of the distal (free) end of the transportation arm 136 in FIG. 10 and correspond to positions [1] to [6] in FIG. 11. More specifically, [1] is the home position (standby position) of the transportation arm 136, [2] is the position of the first media stacker 121, [3] is any position between the home position and the first media stacker 121, [4] is a midpoint or a point near to the midpoint of the vertical range of movement of the transportation arm 136, [5] is the position of the second media stacker 122, and [6] is any position between the midpoint and the second media stacker 122.

Position [7] in FIG. 11 is any position between [1] and [4] in FIG. 10, or any position below [4]; position [8] in FIG. 11 is any position between [2] and [5] in FIG. 10, or any position below [5]. Position [9] in FIG. 11 is any position between [7] and [8].

The transportation arm 136 normally moves along a preset path of travel. In this embodiment of the invention the path of travel (movement) is the path from any of the positions [1], [2], [4] and [5] to any of the positions [1], [2], [4], and [5]. More specifically, the path of travel is the path indicated by arrows A to J in FIG. 10, and position [9] is a position outside of this path of travel. More specifically, when the transportation arm 136 is at position [9], the transportation arm 136 may have unexpectedly stopped outside of the normal path of travel due, for example, to a problem that has occurred in the publisher 200. A respective arm detector is disposed at each of the positions [1], [2], [4], and [5] so that the position of the transportation arm 136 can be detected. This embodiment of the invention calculates the distance to travel from the starting point [1], [2], [4], or [5] to the destination specified by the movement command, and moves the transportation arm 136.

When the transportation arm 136 is positioned at position [3], [6], [7], [8], or [9], the transportation arm 136 first moves to one of the positions where an arm detector is located (any of positions [1], [2], [4], and [5]), the distance to travel is then calculated, and the arm is moved to the destination.

As shown in FIG. 10, the publisher 200 is connected to communicate with a host computer 100, and the publisher 200 has a control unit 190 that controls driving the transportation mechanism 131. The control unit 190 controls moving the transportation arm 136 according to a movement command received from the host computer 100.

When the control unit 190 detects the transportation arm 136 by means of one of the arm detectors, the control unit 190 stores the detected position, that is, position [1], [2], [4], or [5], as the starting point. In this case the control unit 190 functions as a position detection means and a memory means. The control unit 190 then calculates the distance of travel that the transportation arm 136 must move from this starting point to the destination specified by the movement command from the host computer 100.

In response to a media grip command from the host computer 100, the control unit 190 moves gripping claws disposed at the center of the distal end of the transportation arm 136 to grip discs M. In response to a release command from the host computer 100, the control unit 190 also lowers the transportation arm 136 at the destination, and operates the gripping claws to release the discs M. When the a discM has been released, the transportation arm 136 is raised and stopped at the point where descent started.

This embodiment of the invention moves the transportation arm 136 based on a movement command from the host computer 100, and then grips or releases a disc M at the destination based on a grip command or release command. The media transportation modes (operating modes) described above can therefore be set by combining plural movement commands for the transportation arm 136 and grip and release commands for gripping and releasing a disc M by means of the gripping claws. Some media transportation modes are described below.

### External discharge mode

As described above, the external discharge mode is used when the third media stacker 172 is removed.
(1) A blank disc M is gripped from the first media stacker 121 (or second media stacker 122), carried to one of the media drives 141, and released there.
(2) The media drive 141 then writes data to the blank disc M.
(3) The disc M is then gripped from the media drive 141, carried to the label printer 111, and released there.
(4) The label printer 111 then prints a label on the label side of the disc M.
(5) The disc M is then gripped from the label printer 111, carried to the sliding tray 170, and released there.

### Batch processing mode

As described above, the batch processing mode is used when the third media stacker 172 is installed.

The first media stacker 121 and the second media stacker 122 are loaded with blank discs M to the maximum storage capacity. This is a processing mode for continuously producing 100 discs M if 50 discs are loaded into each of the first and second stackers.
(1) A blank disc M is gripped from the second media stacker 122, carried to a media drive 141, and released there.
(2) The media drive 141 then writes data to the blank disc M.
(3) The disc M is then gripped from the media drive 141, carried to the label printer 111, and released there.
(4) The disc M is then gripped from the label printer 111, carried to the third media stacker 172, and released there.
(5) The sequence of steps (1) to (4) is then repeated 49 times.
(6) A blank disc M is gripped from the first media stacker 121, carried to a media drive 141, and released there.
(7) Steps (2) and (3) are executed, and the disc M is then gripped from the label printer 111, carried to the second media stacker 122 and released there.
(8) The sequence of steps (6) and (7) is then repeated 49 times.

At the end of the batch processing mode the processed discs M are stored in the third media stacker 172 and the second media stacker 122. More specifically, the use of each stacker is not fixed, but can be changed according to the operating mode.

The media transportation modes described above are only examples, and other modes are also conceivable. In this embodiment of the invention the transportation arm 136 can carry discs M from any of the units including the media drives 141, the label printer 111, the first media stacker 121, and the second media stacker 122 to any of the units including the media drives 141, the label printer 111, the sliding tray 170, the second media stacker 122, and the third media stacker 172. A plurality of media transportation routes can therefore be set, and the publisher 200 can be set to a variety of operating modes.

The disc gripping or releasing process executed in step (1) in the external discharge mode is described next with reference to the flow chart in FIG. 6.

When a command set including a movement command setting the location of the first media stacker 121 as the destination, a grip command, a movement command setting the location of a media drive 141 as the destination, and a release command is received (step S11 returns Yes), the distal end of the transportation arm 136 is moved according to the movement command to the position [2] of the first media stacker 121 (step S12).

The process of moving the transportation arm 136 in step S12 is described with reference to the flow chart in FIG. 7.

When the control unit 190 receives a movement command (of the command set received in step S11 in FIG. 6) (step S21 returns Yes), the control unit 190 determines if the transportation arm 136 is located at position [1], [2], [4] or [5] (step S22). More specifically, the control unit 190 determines which of the positions [1], [2], [4] and [5], if any, is stored as the starting point of the transportation arm 136.

If one of the positions [1], [2], [4] or [5] is stored as the starting point (step S22 returns Yes), the control unit 190 calculates the distance to travel from the stored starting point to the destination specified by the received movement command (step S23), and then moves the transportation arm 136 (step S24).

Let us assume, the starting point of the transportation arm 136 is the home position [1] and the transportation arm 136 is moved according to the movement command that instructs the first media stacker 121 as the destination. If the movement is completed normally, the control unit 190 stores position [2], the first media stacker 121, as the next starting point. The path of travel in this case is represented by arrows A -> C in FIG. 10.

If the starting point stored by the control unit 190 is position [5], i.e., the first media stacker 121, and the received movement command specifies the position of the media drive 141 as the destination, the transportation arm is moved to position [1], the home position of the transportation arm 136. The path of travel in this case is represented by arrows H -> F -> J in FIG. 10.

When the starting point stored by the control unit 190 is position [2], that is, the position of the first media stacker 121, and the received movement command specifies the position of the label printer 111 as the destination, the transportation arm is also moved to position [1], the home position of the transportation arm 136. The path of travel in this case is represented by arrows D -> B in FIG. 10.

If the starting point stored by the control unit 190 is position [1], the home position of the transportation arm 136, and the received movement command specifies the position of the second media stacker 122 as the destination, the transportation arm is moved to position [5], the location of the second media stacker 122. The path of travel in this case is represented by arrows I -> E -> G in FIG. 10.

If in step S22 none of the positions [1], [2], [4] and [5] is stored as the starting point (step S22 returns No), whether the transportation arm 136 is moving is determined. If the transportation arm 136 is moving (step S25 returns Yes), the received movement command is not executed and the host computer 100 is informed that the transportation arm 136 is in motion (step S26). If movement of the transportation arm 136 has stopped, however, an error is returned to the host computer 100 (step S25 returns No, step S27).

If the transportation arm 136 is not in motion in step S25 (step S25 returns No), the transportation arm 136 is outside the normal path of travel. The movement command is therefore not executed and an error is returned to the host computer 100 indicating that a destination that cannot be reached from the current location was specified (step S27).

For example, the motor could go out of step and stop unexpectedly while the transportation arm 136 is moving from position [1] to position [4] (the situation when the transportation arm 136 is at position [7] after the motor stops), or the motor could go out of step, for example, and stop unexpectedly while gripping or releasing a disc M at position [2] or position [5] (the situation when the transportation arm 136 is at position [8] after the motor stops). If the transportation arm 136 thus stops abnormally, the movement command is not executed and an error report is returned to the host computer 100.

Referring again to FIG. 6, the process of gripping or releasing a disc M is described next.

When the transportation arm 136 moves to the first media stacker 121 (step S12), the control unit 190 determines if the current position enables a normal control of the claw operation. Except for the case in which a disc M has already been gripped due to a command other than the grip command received in step S11, a condition in which a claw operation can be controlled normally is any condition in which the transportation arm 136 is positioned at a point where a disc M can be gripped.

A condition in which the transportation arm 136 is positioned at a point where a disc M can be gripped is when the transportation arm 136 is positioned at one of the positions [1], [2], [4] and [5] where an arm detector is located. This is because the location of the transportation arm 136 is unknown if the transportation arm 136 is positioned at any position other than [1], [2], [4] or [5], and must therefore be moved to one of the positions at which an arm detector is located.

If the control unit 190 determines that the transportation arm 136 is positioned where a disc M can be gripped (step S13 returns Yes), because position [2] at the first media stacker 121 is stored as the starting point, the claws are inserted to the center hole of the discs M and one claw is moved relative to the others radially to the outside to grip one disc M from the first media stacker 121 (step S14).

If step S13 determines that a disc M has already been gripped, or that the transportation arm 136 is positioned at a point where a disc M cannot be gripped, a gripping process abort report is returned to the host computer 100 without gripping the discs M.

With a disc M gripped in step S14, the transportation arm 136 is moved to the home position at position [1] based on the movement command setting the position of the media drive 141 as the destination (step S15). The process of moving the transportation arm 136 in this case is the same as that described in step S12 with reference to the flow chart in FIG. 7. If moving the transportation arm 136 ends normally, the control unit 190 stores the position [1] as the starting point.

Next, the control unit 90 again determines if the current position enables driving and controlling the claws normally.

In step S16 the condition in which driving the claws can be controlled normally is when a disc M has already been gripped and the transportation arm 136 is positioned at a point where the gripped disc M can be released.

If the control unit 190 determines that the transportation arm 136 is positioned at a point where the disc M can be released (step S16 returns Yes) because a disc M has been gripped and position [1], the home position, is stored as the starting point, the one claw is moved radially to the inside to release the disc M onto the media tray 141a of the media drive 141 (step S17).

However, if is determined in step S16 that a disc M has not been gripped or the transportation arm 136 is positioned at a point where the disc M cannot be released, a releasing process abort error is reported to the host computer 100 without releasing the disc (step S18).

Note that if the claws are driven to be closed in step S13 when a disc M has been gripped, the gripped disc M may be dropped. Furthermore, if the claws are driven to release the disc in step S16 when a disc M has not been gripped, the operation is simply wasted.

Furthermore, if the claws are driven in step S13 when the transportation arm 136 is positioned at a point where a disc cannot be gripped, there could be a safety-related problem with the media processing device and damage could result.

In addition, if the claws are driven when the transportation arm 136 is positioned at a point where a disc cannot be released, there could be a safety-related problem with the media processing device and damage could result.

This embodiment of the invention therefore does not execute the gripping and releasing operations in cases such as described above, and executes the grip command and release command only when it is determined that driving the claws can be controlled normally. Operating errors can therefore be prevented.

Furthermore, because the host computer 100 is informed when the grip command or release command is not executed, the user is alerted that the grip command or release command was not executed correctly.

As described above, if the starting point of the transportation arm 136 when a movement command is received from the host computer 100 is at any point not corresponding to position [1], [2], [4] or [5], that is, if the transportation arm 136 is off the normal path of travel of the transportation arm, the control unit 190 in this embodiment of the invention does not execute the received movement command and returns an error report to the host computer 100. The host computer 100 can thus know that a problem with the publisher 200 has occurred. Issuing subsequent commands can therefore be blocked, the publisher 200 can be used safely, and the danger of damage occurring can be reduced.

Furthermore, if the starting point of the transportation arm 136 when a movement command is received from the host computer 100 does not correspond to any of positions [1], [2], [4] and [5] and the transportation arm 136 is moving, this embodiment of the invention reports to the host computer 100 that the movement command could not be executed. The danger of damage to the publisher 200 can therefore be reduced because issuing subsequent commands can be blocked and operating errors will not occur.

## Claims

1. A media processing device that is adapted to communicate with a host computer (100) and is responsive to commands from the host computer (100), the media processing device comprising:
media storage means (11-13; 122, 123, 171,172) for storing one or more data carrier media (2; M);
data writing means (4; 141) adapted to write data to one side of said data carrier media (2; M);
printing means (5; 111) adapted to print information on the other side of said data carrier media (2; M); and
transportation means (6; 131) for transporting said data carrier media (2; M) to any one of the data writing means (4; 141), the printing means (5; 111), and the media storage means (11-13; 122, 123, 171,172) according to a movement command received from said host computer (100);
wherein the transportation means (6; 131) is adapted to report an error to the host computer (100) when a data carrier medium (2; M) cannot be transported according to the movement command from the host computer (100);
wherein the media processing device further comprises:
position detection means (90; 190) adapted to detect each of plural predetermined positions of the transportation means (6; 131); and
memory means (90; 190);
**characterized in that**
said memory means is responsive to said position detection means (90; 190) to store, as a starting point, the current position of the transportation means (6; 131), whenever the transportation means (6; 131) is at any of said plural predetermined positions the position detection means (90; 190) is adapted to detect, and
the transportation means (6; 131) is adapted to execute a received movement command only if one of the plural predetermined positions is stored as the starting point in the memory means when the movement command is received from the host computer (100).

2. The device of claim 1, wherein:
the transportation means (6; 131) comprises gripping means for gripping a data carrier medium (2; M) or releasing a gripped data carrier medium (2; M); and
the transportation means (6; 131) is
- responsive to a grip command from the host computer (100) to determine if the gripping means has gripped a data carrier medium (2; M) so as not to execute the grip command if a data carrier medium (2; M) has already been gripped and to grip a data carrier medium (2; M) otherwise;
- responsive to a release command from the host computer (100) to determine if the gripping means has gripped a data carrier medium (2; M) so as not to execute the release command if no data carrier medium (2; M) has been gripped and to release a gripped data carrier medium (2; M) otherwise, and
- adapted to report an error to the host computer (100) when a grip command or a release command is not executed.

3. A method of controlling the media processing device that is defined in any one of claims 1 to 2, comprising the steps of
a) receiving from the host computer (100) a movement command instructing a transport of a data carrier medium (2; M),
b) checking if the data carrier medium (2; M) can be transported according to the movement command,
c) executing the movement command when the data carrier medium can be transported according to the movement command, and
d) reporting an error to the host computer (100) when the data carrier medium (2; M) cannot be transported according to the movement command, **characterized in that**
step b) comprises checking if any of the predetermined positions detectable by the position detection means (90; 190) is stored as a starting point in the memory means (90; 190), and determining that the data carrier medium (2; M) can be transported according to the movement command only if one of the positions detectable by the position detection means (90; 190) is stored as a starting point in the memory means (90; 190)

4. The method of claim 3 for controlling the media processing device that is defined in claim 3, further comprising
e) receiving from the host computer (100) a grip command or a release command for the gripping means to grip or release a data carrier medium (2; M);
f) checking, in response to the reception of a grip command, if the gripping means has already gripped a data carrier medium (2; M);
g) executing the grip command when step f) reveals that a data carrier medium (2; M) has not already been gripped, while not executing the grip command otherwise;
h) checking, in response to the reception of a release command, if the gripping means has gripped a data carrier medium (2; M),
i) executing the release command when step h) reveals that a data carrier medium (2; M) has been gripped, while not executing the release command otherwise; and
j) reporting an error to the host computer (100) if a grip command is not executed in step g) or a release command is not executed in step i).

## Patentansprüche

1. Medienverarbeitungsvorrichtung, die ausgelegt ist, mit einem Hostcomputer (100) zu kommunizieren, und auf Befehle vom Hostcomputer (100) zu reagieren, wobei die Medienverarbeitungsvorrichtung umfasst:
Medienspeichermittel (11-13; 122, 123, 171, 172) zum Speichern eines oder mehrerer Datenträgermedien (2; M);
Datenschreibmittel (4; 141), das ausgelegt ist, Daten auf eine Seite der Datenträgermedien (2; M) zu schreiben;
Druckmittel (5; 111), das ausgelegt ist, Informationen auf die andere Seite der Datenträgermedien (2; M) zu drucken; und
Transportmittel (6; 131) zum Transportieren der Datenträgermedien (2; M) an ein beliebiges des Datenschreibmittels (4; 141), des Druckmittels (5; 111) und des Medienspeichermittels (11-13; 122, 123, 171, 172) in Übereinstimmung mit einem vom Hostcomputer (100) empfangenen Bewegungsbefehl;
wobei das Transportmittel (6; 131) ausgelegt ist, einen Fehler an den Hostcomputer (100) zu melden, wenn ein Datenträgermedium (2; M) nicht in Übereinstimmung mit dem Bewegungsbefehl vom Hostcomputer (100) transportiert werden kann;
wobei die Medienverarbeitungsvorrichtung ferner umfasst:
Positionserkennungsmittel (90; 190), das ausgelegt ist, jede einer Vielzahl von vorbestimmten Positionen des Transportmittels (6; 131) zu erkennen; und
Arbeitsspeichermittel (90; 190);
**dadurch gekennzeichnet, dass**
das Arbeitsspeichermittel auf das Positionserkennungsmittel (90; 190) reagiert, um immer dann die aktuelle Position des Transportmittels (6; 131) als einen Startpunkt zu speichern, wenn sich das Transportmittel (6; 131) an einer beliebigen der Vielzahl der vorbestimmten Positionen befindet, für deren Erkennen das Positionserkennungsmittel (90; 190) ausgelegt ist, und
das Transportmittel (6; 131) ausgelegt ist, einen empfangenen Bewegungsbefehl nur dann auszuführen, wenn eine der Vielzahl der vorbestimmten Positionen als der Startpunkt im Arbeitsspeichermittel gespeichert ist, wenn der Bewegungsbefehl vom Hostcomputer (100) empfangen wird.

2. Vorrichtung nach Anspruch 1, wobei:
das Transportmittel (6; 131) Greifmittel zum Ergreifen eines Datenträgermediums (2; M) oder zum Freigeben eines ergriffenen Datenträgermediums (2; M) umfasst; und
das Transportmittel (6; 131)
- auf einen Greifbefehl vom Hostcomputer (100) reagiert, um zu ermitteln, ob das Greifmittel ein Datenträgermedium (2; M) ergriffen hat, sodass es den Greifbefehl nicht ausführt, falls bereits ein Datenträgermedium (2; M) ergriffen wurde, und es andernfalls ein Datenträgermedium (2; M) ergreift;
- auf einen Freigabebefehl vom Hostcomputer (100) reagiert, um zu ermitteln, ob das Greifmittel ein Datenträgermedium (2; M) ergriffen hat, sodass es den Freigabebefehl nicht ausführt, falls kein Datenträgermedium (2; M) ergriffen wurde, und es andernfalls ein Datenträgermedium (2; M) freigibt, und
- ausgelegt ist, dem Hostcomputer (100) einen Fehler zu melden, wenn kein Greifbefehl oder Freigabebefehl ausgeführt wird.

3. Verfahren zum Steuern der Medienverarbeitungsvorrichtung, die in einem der Ansprüche 1 bis 2 definiert ist, wobei das Verfahren die Schritte umfasst zum
a) Empfangen eines Bewegungsbefehls, der einen Transport eines Datenträgermediums (2; M) anweist, vom Hostcomputer (100),
b) Prüfen, ob das Datenträgermedium (2; M) in Übereinstimmung mit dem Bewegungsbefehl transportiert werden kann,
c) Ausführen des Bewegungsbefehls, wenn das Datenträgermedium in Übereinstimmung mit dem Bewegungsbefehl transportiert werden kann, und
d) Melden eines Fehlers an den Hostcomputer (100), wenn das Datenträgermedium (2; M) nicht in Übereinstimmung mit dem Bewegungsbefehl transportiert werden kann, **dadurch gekennzeichnet, dass** der Schritt b) Prüfen, ob irgendwelche der vorbestimmten Positionen, die vom Positionserkennungsmittel (90; 190) erkannt werden können, als ein Startpunkt im Arbeitsspeichermittel (90; 190) gespeichert ist, und Ermitteln umfasst, dass das Datenträgermedium (2; M) nur dann in Übereinstimmung mit dem Bewegungsbefehl transportiert werden kann, wenn eine der Positionen, die vom Positionserkennungsmittel (90; 190) erkannt werden können, als ein Startpunkt im Arbeitsspeichermittel (90; 190) gespeichert ist.

4. Verfahren nach Anspruch 3 zum Steuern der Medienverarbeitungsvorrichtung, die in Anspruch 3 definiert ist, wobei das Verfahren ferner umfasst
e) Empfangen eines Greifbefehls oder eines Freigabebefehls vom Hostcomputer (100), damit das Greifmittel ein Datenträgermedium (2; M) ergreift oder freigibt;
f) Prüfen, als Reaktion auf den Empfang eines Greifbefehls, ob das Greifmittel bereits ein Datenträgermedium (2; M) ergriffen hat;
g) Ausführen des Greifbefehls, wenn der Schritt f) zeigt, dass noch kein Datenträgermedium (2; M) ergriffen wurde, andernfalls kein Ausführen des Greifbefehls;
h) Prüfen, als Reaktion auf den Empfang eines Freigabebefehls, ob das Greifmittel ein Datenträgermedium (2; M) ergriffen hat;
i) Ausführen des Freigabebefehls, wenn der Schritt h) zeigt, dass ein Datenträgermedium (2; M) ergriffen wurde, während der Freigabebefehl andernfalls nicht ausgeführt wird; und
j) Melden eines Fehlers an den Hostcomputer (100), falls in Schritt g) kein Greifbefehl ausgeführt wird oder in Schritt i) kein Freigabebefehl ausgeführt wird.

## Revendications

1. Dispositif de traitement de supports qui est conçu pour communiquer avec un ordinateur hôte (100) et est sensible à des instructions provenant de l'ordinateur hôte (100), le dispositif de traitement de supports comprenant :
un moyen de stockage de supports (11-13 ; 122, 123, 171, 172) pour stocker un ou plusieurs supports transportant des données (2 ; M) ;
un moyen d'écriture de données (4 ; 141) conçu pour écrire des données sur un côté desdits supports transportant des données (2 ; M) ;
un moyen d'impression (5 ; 111) conçu pour imprimer des informations sur l'autre côté desdits supports transportant des données (2 ; M) ; et
un moyen de transport (6 ; 131) pour transporter lesdits supports transportant des données (2 ; M) vers l'un quelconque parmi le moyen d'écriture de données (4 ; 141), le moyen d'impression (5 ; 111) et le moyen de stockage de supports (11-13 ; 122, 123, 171, 172) selon une instruction de déplacement reçue à partir dudit ordinateur hôte (100) ;
le moyen de transport (6 ; 131) étant conçu pour rapporter une erreur à l'ordinateur hôte (100) lorsqu'un support transportant des données (2 ; M) ne peut pas être transporté conformément à l'instruction de déplacement provenant de l'ordinateur hôte (100) ;
le dispositif de traitement de supports comprenant en outre :
un moyen de détection de position (90 ; 190) conçu pour détecter chacune d'une pluralité de positions prédéterminées du moyen de transport (6 ; 131) ; et
un moyen de mémoire (90 ; 190) ;
**caractérisé en ce que**
ledit moyen de mémoire est sensible audit moyen de détection de position (90 ; 190) pour stocker, en tant que point de départ, la position courante du moyen de transport (6 ; 131), à chaque fois que le moyen de transport (6 ; 131) se trouve à une position quelconque parmi ladite pluralité de positions prédéterminées que le moyen de détection de position (90 ; 190) est conçu pour détecter, et
le moyen de transport (6 ; 131) est conçu pour exécuter une instruction de déplacement reçue uniquement si l'une de la pluralité de positions prédéterminées est stockée en tant que point de départ dans le moyen de mémoire lorsque l'instruction de déplacement est reçue à partir de l'ordinateur hôte (100).

2. Dispositif selon la revendication 1, dans lequel :
le moyen de transport (6 ; 131) comprend un moyen de préhension pour saisir un support transportant des données (2 ; M) ou libérer un support transportant des données (2 ; M) saisi ; et
le moyen de transport (6 ; 131) est
- sensible à une instruction de préhension provenant de l'ordinateur hôte (100) pour déterminer si le moyen de préhension a ou non saisi un support transportant des données (2 ; M) de façon à ne pas exécuter l'instruction de préhension si un support transportant des données (2 ; M) a déjà été saisi et à saisir un support transportant des données (2 ; M) autrement ;
- sensible à une instruction de libération provenant de l'ordinateur hôte (100) pour déterminer si le moyen de préhension a ou non saisi un support transportant des données (2 ; M) de façon à ne pas exécuter l'instruction de libération si aucun support transportant des données (2 ; M) n'a été saisi et à libérer un support transportant des données (2 ; M) saisi autrement, et
- conçu pour rapporter une erreur à l'ordinateur hôte (100) lorsqu'une instruction de préhension ou une instruction de libération n'est pas exécutée.

3. Procédé de commande du dispositif de traitement de supports qui est défini à l'une quelconque des revendications 1 à 2, comprenant les étapes suivantes
a) recevoir, à partir de l'ordinateur hôte (100), une instruction de déplacement ordonnant un transport d'un support transportant des données (2 ; M),
b) vérifier si le support transportant des données (2 ; M) peut ou non être transporté conformément à l'instruction de déplacement,
c) exécuter l'instruction de déplacement lorsque le support transportant des données peut être transporté conformément à l'instruction de déplacement, et
d) rapporter une erreur à l'ordinateur hôte (100) lorsque le support transportant des données (2 ; M) ne peut pas être transporté conformément à l'instruction de déplacement, **caractérisé en ce que**
l'étape b) comprend la vérification du point de savoir si l'une quelconque des positions prédéterminées pouvant être détectées par le moyen de détection de position (90 ; 190) est ou non stockée en tant que point de départ dans le moyen de mémoire (90 ; 190), et la détermination du fait que le support transportant des données (2 ; M) peut être transporté conformément à l'instruction de déplacement uniquement si l'une des positions pouvant être détectées par le moyen de détection de position (90 ; 190) est stockée en tant que point de départ dans le moyen de mémoire (90 ; 190).

4. Procédé selon la revendication 3 pour commander le dispositif de traitement de supports qui est défini à la revendication 3, comprenant en outre
e) recevoir, à partir de l'ordinateur hôte (100), une instruction de préhension ou une instruction de libération pour que le moyen de préhension saisisse ou libère un support transportant des données (2 ; M) ;
f) vérifier, en réponse à la réception d'une instruction de préhension, si le moyen de préhension a ou non déjà saisi un support transportant des données (2 ; M) ;
g) exécuter l'instruction de préhension lorsque l'étape f) révèle qu'un support transportant des données (2 ; M) n'a pas été déjà saisi, tout en n'exécutant pas l'instruction de préhension autrement ;
h) vérifier, en réponse à la réception d'une instruction de libération, si le moyen de préhension a ou non saisi un support transportant des données (2 ; M),
i) exécuter l'instruction de libération lorsque l'étape h) révèle qu'un support transportant des données (2 ; M) a été saisi, tout en n'exécutant pas l'instruction de libération autrement ; et
j) rapporter une erreur à l'ordinateur hôte (100) si une instruction de préhension n'est pas exécutée à l'étape g) ou si une instruction de libération n'est pas exécutée à l'étape i).
